# EUROPEAN PATENT SPECIFICATION

(11) **EP 1 380 554 B1**
(45) Date of publication and mention of the grant of the patent: **03.01.2018**
(21) Application number: 03014455.4
(22) Date of filing: 01.07.2003
(51) Int. Cl.: C04B 24/26, C04B 28/02

(54) **Hydraulic composition, and method of improving fluidity retention of the same**
Hydraulische Zusammensetzung und Verfahren zur Verbesserung der Aufrechterhaltung der Fliessfähigkeit derselben
Composition hydraulique et procédé d'amélioration de sa retention de fluidité

(30) Priority: 11.07.2002 JP 2002202689
(43) Date of publication of application: 14.01.2004
(73) Proprietor: KAO CORPORATION, Tokyo 103-8210 (JP)
(72) Inventor: Hamada, Daisuke, Kao Corp.Research Laboratories, Wakayama-shi, Wakayama (JP); Ehara, Masayoshi, Kao Corp.Research Laboratories, Wakayama-shi, Wakayama (JP); Yamato, Fujio, Kao Corp.Research Laboratories, Wakayama-shi, Wakayama (JP)
(74) Representative: Hoffmann Eitle

(56) References cited:
- WO-A-00/76936
- JP-A- 6 092 704
- JP-A- 9 241 055
- JP-A- 10 007 445
- TANAKA H. ET. AL.: "High-strength concrete with controlled workable time" CHEMICAL ABSTRACTS, AMERICAN CHEMICAL SOCIETY, US, vol. 114, no. 26, 1 July 1991 (1991-07-01), page 351, XP000194965 ISSN: 0009-2258

## Description

### Technical Field

The present invention relates to a hydraulic composition. More specifically, the invention relates to a hydraulic composition using a cement containing a pozzolanic substance.

### Background of the Invention

For ready-mixed concrete, it is preferable to retain a given fluidity thereof for 60 to 90 minutes from the viewpoint of workability. For ordinary cement, various fluidity-retaining techniques are disclosed, and they are widely used at present.

However, as for cement containing a pozzolanic substance as used in Europe, a fluidity-retaining technique has not yet been well established, and a problem of the fluidity loss thereof on site, that is, slump loss is caused. Thus, it is difficult in the present circumstances to obtain a good-quality ready-mixed concrete containing the cement. It is considered that cement containing a pozzolanic substance is more advantageous in effectively utilizing waste, has economy, and is more durable than ordinary cement. Because of such problems of fluidity loss, however, cement containing a pozzolanic substance has not come into wide use.

Cement which contains a pozzolanic substance is cement which contains not only cement clinkers but also a pozzolanic powder substance, and is classified into blast furnace cement and fly ash cement in Japan. The cement is classified into CEM II/B (which contains 21 to 35% of powder other than cement), CEM III (which contains 35% or more of blast furnace slag powder), CEM IV (which contains a pozzolanic substance selected from silica fume, natural pozzolan, industrial pozzolan and fly ash) and CEM V (which contains a pozzolanic substance selected from natural pozzolan, industrial pozzolan and fly ash), which are all referred to as ENV197, in Europe.

Among these cements, in particular, CEM II/A-P, CEM II/B-P, CEM II/A-Q, CEM II/B-Q, CEM II/A-M, CEM II/B-M, CEM III, CEM IV, CEM V, are brought into question. With regards to the above, for CEM II/B-P, CEMII/B-M, CEM IV and CEM V, which contain a large amount of natural pozzolan, the fluidity retention thereof is especially difficult.

JP-A 9-286645 discloses, as a cement additive being excellent in slump retention, a copolymer using polyethylene glycol (meth) acrylates having short and long chains. Even when the copolymer is used, this manner is insufficient for obtaining the fluidity retention of a hydraulic composition which contains a cement containing a pozzolanic substance because of the above-mentioned reason.

On the other hand, in JP-A 10-7445, an oxycarboxylic acid is used as a retarder for concrete or the like. This is a technique for maintaining the initial slump for 1 to 5 days, however, inhibiting setting.

WO-A 00/76936 describes the use of a water reducer including a polyoxyalkylene polymer , a sugar as gluconic acid and additionally an alkali or alkaline earth metal chloride to improve early strength development of cement such as pozzolanic cement.

JP 6-092704 discloses a concrete admixture comprising cement, blast furnace slag, fly ash or silica fume.

### Summary of the invention

An object of the invention is to provide a hydraulic composition, including cement which contains a pozzolanic substance, being excellent in fluidity retention. Moreover, the setting retardation can be controlled at a given level. For example, the setting time of the composition can be set in one day or less.

The invention relates to a hydraulic composition comprising, a high-range water-reducing agent(e.g. superplasticizer), an oxycarboxylic acid or a salt thereof (hereinafter, which may be referred to merely as the oxycarboxylic acid), and cement comprising 10 to 95 percent by weight of a pozzolanic substance.

The invention provides a method of improving the fluidity retention of a cement or hydraulic composition comprising cement including 20 to 80 percent by weight of a pozzolanic substance, comprising adding a high-range water-reducing agent and 0.1 to less than 0.2 parts by weight, to 100 parts by weight of the cement, of an oxycarboxylic acid or a salt thereof to the composition, wherein the pozzolanic substance is natural pozzolan.

The invention further provides use of a high-range water-reducing agent and an oxycarboxylic acid or a salt thereof for improving fluidity retention of a cement composition comprising cement inducing 20 to 80 percent by weight of a pozzolanic substance.

### Detailed Description of the Invention

It appears that the reason why the problem of slump loss of cement which contains a pozzolanic substance is generated is as follows: the pozzolanic powder substance generally has high adsorptivity of a cement dispersing agent (e.g. plasticizer or superplasticizer); in the case where cement which contains the pozzolanic substance is used to produce concrete or mortar, the pozzolanic substance adsorbs the dispersing agent which remains in the liquid phase, so that the dispersion of cement slurry becomes unstable, whereby the aggregation rate becomes faster. Furthermore, in the case of natural pozzolan, it is porous and has a very large specific surface area. Therefore, the amount of the dispersing agent adsorbed increases so as to make stabilization of the dispersion difficult.

It can be considered that even if cement which contains a pozzolanic substance is used, the hydraulic composition of the invention exhibits excellent fluidity by the effect of the oxycarboxylic acid and the high-range water-reducing agent immediately after the production of concrete or mortar, and thereafter the hydraulic composition exhibits excellent fluidity retention by the effect of the oxycarboxylic acid. It can also be considered that both the oxycarboxylic acid and the high-range water-reducing agent (e.g. superplasticizer) are adsorbed on the surface of the cement substance from the time immediately after the production of the concrete or mortar, whereby the adsorption amount of the oxycarboxylic acid is reduced, so that setting retardation based on the oxycarboxylic acid is suppressed.

Examples of the high-range water-reducing agent (e.g. superplasticizer)used in the hydraulic composition of the invention include naphthalenesulfonic acid based agents, melaminesulfonic acid based agents, and polycarboxylic acid based agents. A polycarboxylic acid based agent having graft chains of alkyleneoxides or the like is preferred. More preferred is a polycarboxylic acid based agent having graft chains of alkyleneoxides wherein the average addition mole number of ethylene oxide (hereinafter, referred to as EO) is from 3 to 300 and, from the viewpoint of setting, this mole number is preferably from 100 to 300. It is preferable to use, in combination, two or more polycarboxylic acid based agents having graft chains of alkyleneoxides, wherein at least one of which is a polycarboxylic acid based agent having graft chains of alkyleneoxides wherein the average addition mole number of the alkyleneoxide, preferably EO, is from 100 to 300.

The invention provides a method of imparting excellent fluidity and fluidity retention to the cement or hydraulic composition and a method of improving the fluidity and/or fluidity retention of a hydraulic composition and/or a method of maintaining excellent fluidity of a hydraulic composition. The invention unexpectedly provides improved fluidity retention such that a resulting cement composition can be set selectively at a given point in time.

It is preferable in the invention that the high-range water reducing agent is a copolymer obtained by polymerizing at least one monomer (a) represented by formula (A): 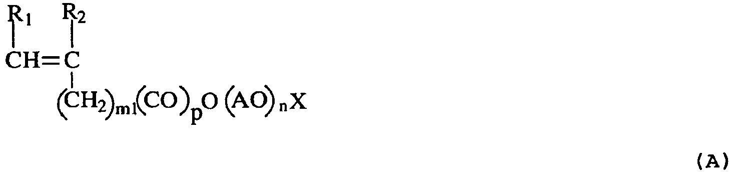 wherein R₁ represents a hydrogen atom, a methyl group or-(CH₂)mCOOM, M representing a hydrogen atom, an alkali metal, an alkaline earth metal, ammonium, an alkylammonium or a substituted alkylammonium, an amine salt or a substituted amine salt, m being a number from 0 to 2, R₂ represents a hydrogen atom or a methyl group, m1 is a number from 0 to 2, p is 0 or 1, AO is a C₂₋₄ oxyalkylene group, n is a number from 2 to 300 and X represents a hydrogen atom or a C₁₋₂₂ alkyl group;

with at least one monomer (b) selected from compounds represented by formulae (B) to (C): 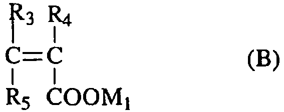 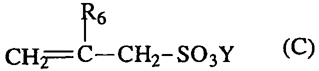 wherein R₃ to R₅ are the same as or different from one another and each represent a hydrogen atom, a methyl group or-(CH₂)m₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or a substituted amine salt and m2 is a number from 0 to 2.

The copolymer wherein m1 is 0 and p is 1 is preferable.

As the oxycarboxylic acid used in the invention, an acid having 2 to 20 carbon atoms is preferred and an acid having 2 to 10 carbon atoms is particularly preferred, and an acid having 1 to 8 carboxylic groups is preferred and an acid having 1 to 3 carboxylic groups is particularly preferred. The salt of an oxycarboxylic acid can be used. Examples thereof include gluconic acid, glucoheptonic acid, galactonic acid, citric acid, tartaric acid, malic acid, glycolic acid, lactic acid, α-oxybutyric acid, lactobionic acid, and salts thereof. Examples of the salts include inorganic salts such as sodium salts and potassium salts, and organic salts. Gluconic acid, glucoheptonic acid and salts thereof (in particular, sodium salts) are particularly preferred from the viewpoint of cement dispersibility.

The amount of the oxycarboxylic acid or the salt by weight of cement thereof is 0.1 part or more and less than 0.2 part by weight or 0.1 part or more and less than 0.15 part by weight to 100 parts by weight of the cement to make both shortening of setting time and fluidity retention in balance.

Regarding the weight ratio between the active content of the high-range water-reducing agent(e.g. superplasticizer) and that of the oxycarboxylic acid, the ratio of the high-range water-reducing agent(e.g. superplasticizer) to the oxycarboxylic acid or a salt thereof is preferably from 10/90 to 95/5, more preferably from 20/80 to 90/10, and even more preferably from 30/70 to 85/15 to make both reducing of setting time and fluidity retention in balance.

The total amount of the high-range water-reducing agent(e.g. superplasticizer) and the oxycarboxylic acid varies depending on concrete-blending conditions. Considering the balance of slump retention, setting retardation, a poor hardening property and others, the total amount in terms of the active content is preferably from 0.05 to 3 parts by weight, more preferably from 0.1 to 1 part by weight, to 100 parts of the cement.

The method of adding the high-range water-reducing agent (e.g. superplasticizer) and the oxycarboxylic acid is the same as for ordinary hydraulic compositions, and they may be directly added to concrete when the concrete is mixed (and kneaded), or may be diluted with the water to be mixed in advance, and then added.

The high-range water-reducing agent (e.g. superplasticizer) and the oxycarboxylic acid are preferably used as a single liquid type composition, wherein the two are pre-mixed, from the viewpoint of workability. In particular, in the case that a polycarboxylic acid based water-reducing agent is mixed in such an embodiment, the concentration of the active contents (in particular, the total concentration of the high-range water-reducing agent(e.g. superplasticizer) and the oxycarboxylic acid) in the composition is preferably 40% or less by weight from the viewpoint of the stability of the composition when the oxycarboxylic acid is blended in an acid form. The concentration of the active contents (in particular, the total concentration of the high-range water-reducing agent (e.g. superplasticizer) and the oxycarboxylic acid) in the composition is preferably 30% or less by weight when the oxycarboxylic acid is blended in the neutralized form, that is, in the form of a salt thereof. The balance may be preferably water.

A pozzolanic substance is a composition which is rich in SiO₂ or Al₂O₃ and has characteristics of reacting with Ca(OH)₂ or Ca ions in the presence of water to generate a new hydrate. The pozzolan is natural
pozzolan resulting from white clay (china clay) and volcanic ash, and volcanic soil.

The pozzolanic substance is contained in an amount of 20% or more and 80% or less by weight, and preferably
in an amount of 30% or more and 70% or less by weight in the cement.

Other additives(admixture)for a hydraulic composition such as water-reducing agents (e.g. plasticizer), an air entraining agent, an antifoaming agent, an antiseptic agent and so on may be incorporated into the hydraulic composition of the invention according to its use thereof.

According to the hydraulic composition of the invention, excellent fluidity and fluidity retention are obtained. It appears that this is because the oxycarboxylic acid is adsorbed on the surface of the pozzolanic substance, whereby the adsorption of the high-range water-reducing agent(e.g. super plasticizer) is controlled, so that the effect of the high-range water-reducing agent(e.g. super plasticizer) can be sufficiently exhibited.

### [Examples]

### <Production Example 1>

Into a reaction vessel made of glass were charged 500 parts by weight of water (hereinafter, which is referred to as parts), the vessel being provided with a thermometer, a stirrer, a dropping funnel, a nitrogen introducing tube, and a reflux condenser, and then the inside of the reaction vessel was substituted with nitrogen while the system was stirred. The system was heated to 80°C in the nitrogen atmosphere. Next, thereto were dropwise added an aqueous monomer solution obtained by mixing 240 parts of methoxypolyethylene glycol monomethacrylate (EO average addition mole number = 5), 120 parts of methacrylic acid, 43.2 parts of water and 3.3 parts of 2-mercaptoethanol as a chain transfer agent, and 50 parts of a 10% by mass solution of ammonium persulfate in water for 4 hours. After the end of the addition, 15 parts of a 10% by weight solution of ammonium persulfate in water were dropwise added to the solution for 1 hour. Thereafter, the temperature was continuously kept at 80°C for 1 hour to complete the polymerization reaction. The solution was then neutralized with a 48% by weight solution of sodium hydroxide in water. There was yielded a polycarboxylic acid based water-reducing agent <1> made of an aqueous solution of a copolymer having a weight average molecular weight (conversed to polyethylene oxide on the basis of gel permeation chromatography, and the same rule is correspondingly applied to the following examples) of 38000. The pH of this polycarboxylic acid based water-reducing agent <1> was 6.0(at 20°C, 5% solution).

### <Production Example 2>

### (1) Monomers

The following materials were used as monomers to produce a copolymer by the following production method:
- A-1: methoxypolyethylene glycol monomethacrylate (EO average addition mole number = 9, weight average molecular number: 496)
- A-2: methoxypolyethylene glycol monomethacrylate (EO average addition mole number = 120, weight average molecular number: 5380)
- B-1: methacrylic acid

### (2) Production of a copolymer (dispersing agent b-7)

Into a reaction vessel made of glass were charged 1107 parts by weight (hereinafter, referred to as parts) of water, and the temperature of the system was raised to 70°C in the nitrogen atmosphere. Next, thereto were dropwise added three solutions, that is, a monomer-mixed solution (1) obtained by mixing 179 parts of the monomer A-1, 343 parts of the monomer A-2, 101 parts of the monomer B-1 and 281 parts of water, 41.0 parts of a 10% by weight solution of 2-mercaptoethanol in water, and 36.5 parts of a 10% by weight ammonium persulfate in water at the same time for 55 minutes so as to conduct copolymerization reaction. Next, to this reaction system were dropwise added three solutions, that is, a monomer-mixed solution (2) obtained by mixing 76 parts of the monomer A-1, 124 parts of the monomer A-2, 25.7 parts of B-1 and 103 parts of water, 12.0 parts of a 10% by weight solution of 2-mercaptoethanol in water, and 10. 8 parts of a 10% by weight ammonium persulfate in water at the same time for 20 minutes so as to conduct copolymerization reaction. Furthermore, thereto were dropwise added three solutions, that is, a monomer-mixed solution (3) obtained by mixing 62 parts of the monomer A-1, 94 parts of the monomer A-2, 15 parts of the monomer B-1 and 78 parts of water, 18 parts of a 10% by weight solution of 2-mercaptoethanol in water, and 7.2 parts of a 10% by weight ammonium persulfate in water at the same time for 15 minutes so as to conduct copolymerization reaction. The reaction was conducted for 90 minutes as a whole. After the end of the addition, the resultant was ripened at the same temperature for 1 hour, and thereto were dropwise added 27.3 parts of a 10% by weight solution of ammonium persulfate in water over 10 minutes. Thereafter, the resultant was ripened at 70°C for 2 hours to complete the copolymerization reaction. Furthermore, thereto were added 59 parts of a 48% by weight solution of sodium hydroxide in water to perform neutralization. In this way, a copolymer was yielded. This was called polycarboxylic acid based water-reducing agent <6>.

### <Example>

### [Blend components]

High-range water-reducing agents used in the Examples are shown below.
- naphthalene based water-reducing agent: Mighty 150 (Kao Corp.)
   polycarboxylic acid based water-reducing agent <1>: the copolymer produced in Production Example 1
- polycarboxylic acid based water-reducing agent <2>: a copolymer of methoxypolyethylene glycol methacrylate (EO average addition mole number: 130)/methacrylic acid = 15/85 (mole ratio) (weight average molecular weight: 55000), which was neutralized with NaOH
- polycarboxylic acid based water-reducing agent <3>: a copolymer of methoxypolyethylene glycol methacrylate (EO average addition mole number: 130)/methacrylic acid/methyl acrylate = 5/25/70 (mole ratio) (weight average molecular weight: 48000), which was neutralized with NaOH
- polycarboxylic acid based water-reducing agent <4>: a copolymer of methoxypolyethylene glycol methacrylate (EO average addition mole number: 25)/methacrylic acid = 30/70 (mole ratio) (weight average molecular weight: 38000), which was neutralized with NaOH
- polycarboxylic acid based water-reducing agent <5>: a copolymer of an EO adduct of allyl alcohol (average addition mole number: 35) /maleic anhydride = 35/65 (mole ratio) (weight average molecular weight: 32000), which was neutralized with NaOH
- polycarboxylic acid based water-reducing agent <6>: the copolymer yielded in Production Example 2

The pHs (after the neutralization) of all of the above-mentioned copolymers were from 6 to 7 (at 20°C).

### [Concrete test]

To a concrete blend shown in Table 1, which will be described later, were added a high-range water-reducing agent and an oxycarboxylic acid shown in Table 2 in amounts shown in Table 2 to perform a concrete test. The high-range water-reducing agent and the oxycarboxylic acid were used in the form of an aqueous solution containing these. A 60-liter forcible biaxial mixer (IHI Co.) was used to mix and knead the concrete. Thereto were added a coarse aggregate, a fine aggregate, a cement, and the water containing the aqueous solution of the high-range water-reducing agent and the oxycarboxylic acid, and then they were mixed for 90 seconds to produce fresh concrete.

The slump test of the fresh concrete was performed in accordance with Japanese Industrial Standard (slump: JIS A 1101). The test was performed in a laboratory in which the temperature was controlled to 20°C. At this time, the addition amounts of the high-range water-reducing agent and the oxycarboxylic acid were adjusted in such a manner that the slump would be 21 cm ± 0.5 cm. In 0 minute just after the production (immediately after the production), 30 minutes thereafter, and 60 minutes thereafter, the slump was measured. About the slump in 60 minutes thereafter, a level of 10 cm or more is the lowest and necessary level. It can be said that a level of 15 cm or more is good and a level of 18 cm or more is very good. The exothermic hydration peak was measured by the following method. A mesh having a sieve opening of 5 mm was used to collect mortar from the produced fresh concrete, and the exothermic hydration peak behavior thereof was measured (calorimeter: TCC2-6, manufactured by Tokyo KiKou). The peak time of a second exothermic hydration, resulting mainly from the hydration reaction of C3S, mortars in the respective concretes were compared. This is an index for the setting time. A time of 1500 minutes or less is the lowest and necessary level, and it can be said that a time of 1200 minutes or less is good and a time of 900 minutes or less is very good. The evaluation results are shown in Table 2.

**Table 1**

| Concrete blend | | | | | | | |
|---|---|---|---|---|---|---|---|
| | W | C | S | G | Air | W/C (% by weight) | S/A (% by volume) |
| Unit Weight (kg/m³) | 178 | 371 | 794 | 917 | - | 48.0 | 47.0 |
| Unit Volume (L/m³) | 178 | 117 | 310 | 350 | 45 | | |

Symbols in the table have the following meanings.
W: water, C: cement, S: mountain sand (hill sand produced from Kimitsu), and G: cracked rocks (cracked rocks produced from Ibaragi).

As the cement, the following were used as shown in Table 2:
1: CEM IV32, 5R B (containing about 40% by weight of natural pozzolan)
2: CEM IV32, 5R A (containing about 20% by weight of natural pozzolan)
3: CEM III42, 5N A (containing about 65% by weight of blast furnace slag)
4: CEM I42, 5R (containing neither ordinary Portland cement nor pozzolanic substance)

### Table 2

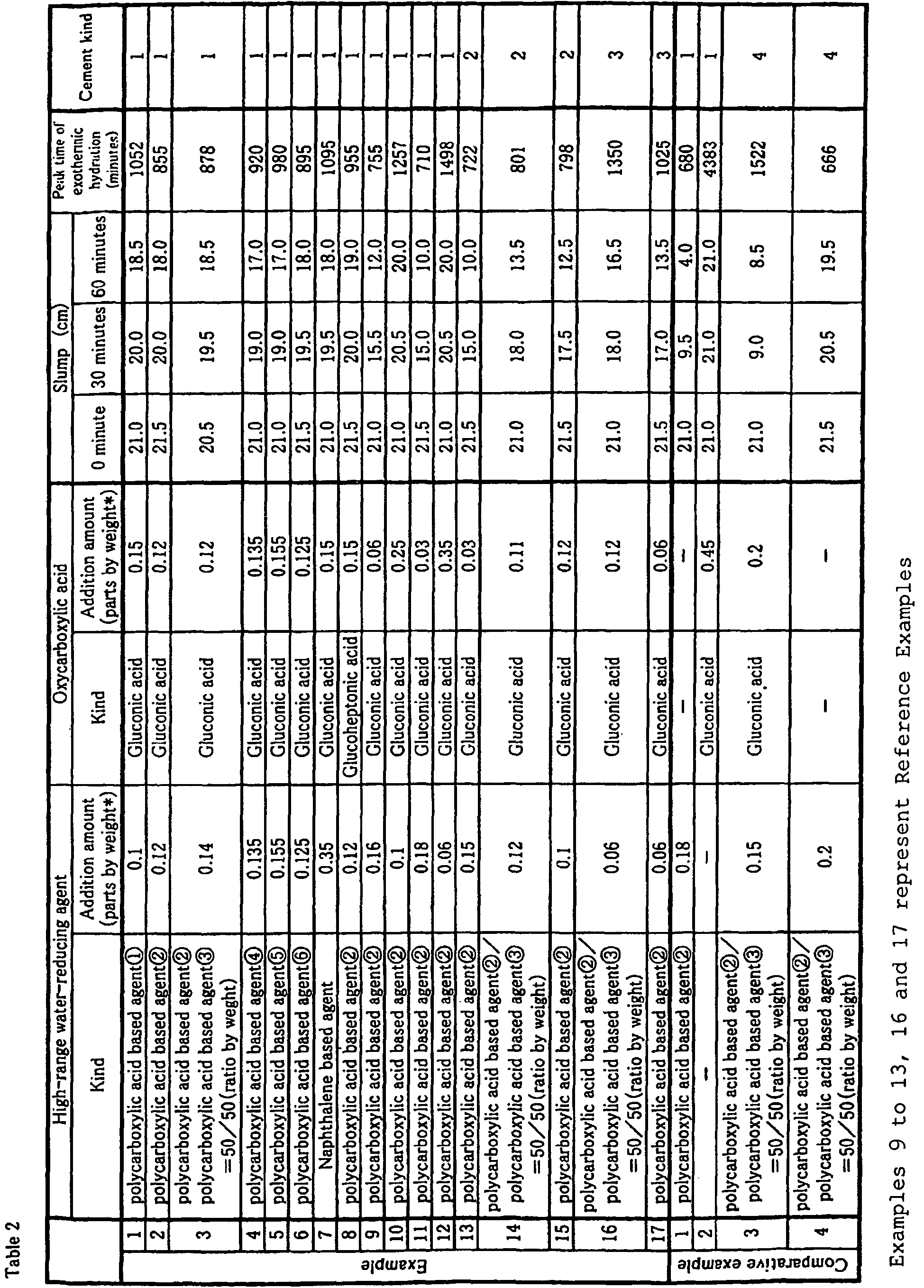

* Each of the addition amounts in Table 2 is an amount of the active content to 100 parts by weight of the cement.

The addition amounts of the oxycarboxylic acid are compared under a condition that the cements were the same. In Examples 1 to 8. the slump loss after 60 minutes was smaller as compared with Reference Example 9 or 11 wherein the addition amount of the oxycarboxylic acid was smaller. Thus, the fluidity retention was made better. On the other hand, as compared with Reference Examples 10 or 12 wherein the addition amount of the oxycarboxylic acid was larger, the retention of the slump was substantially the same in the two but Examples 1 to 8 were excellent in setting retardation, represented by the peak time of the exothermic hydration.

In particular, in Examples 2, 3 and 6, from the viewpoint of compatibility of fluidity retention with setting retardation, it appears that the amount of the oxycarboxylic acid was within the most preferred range among the Examples.

The oxycarboxylic acid or the high-range water-reducing agent was used alone in Comparative Examples 1 and 2 and it is seen that either fluidity retention or setting retardation was poor. It is difficult that both are good in balance.

On the other hand, Example 1 and Example 7 are compared, in which the addition amounts of the oxycarboxylic acid were the same but the kinds of the high-range water-reducing agent were different. In Example 1 using the polycarboxylic acid based agent as a high-range water-reducing agent, the required amount thereof was about 1/3 of the use amount in Example 7 using the naphthalene based agent, but the fluidity retention and setting retardation of Example 1 were substantially equal to or more than those in Example 7. Accordingly, it can be said that the use of the polycarboxylic acid based high-range water-reducing agent is more preferred.

Examples 3, 14 and 16 and Comparative Example 3, which used the same high-range water-reducing agent and the oxycarboxylic acid but used different kinds of the cement are compared. The case of the cement 1 containing about 40% of natural pozzolan in Example 1 was best in both fluidity retention and setting retardation. Cement 2 containing about 20% of natural pozzolan in Example 14 and cement 3 containing blast furnace slag (artificial pozzolan) in Reference Example 16 were second best. Cement 4 containing no pozzolanic substance in Comparative Example 3 was poor in fluidity retention and setting retardation.

## Claims

1. A method of improving fluidity retention of a hydraulic composition comprising cement including 20 to 80 percent by weight of a pozzolanic substance, comprising adding a high-range water-reducing agent and 0.1 to less than 0.2 parts by weight, to 100 parts by weight of the cement, of an oxycarboxylic acid or a salt thereof to the composition, wherein the pozzolanic substance is natural pozzolan.

2. The method of Claim 1, wherein the high-range water-reducing agent is a copolymer obtained by polymerizing at least one monomer (a) represented by formula (A): 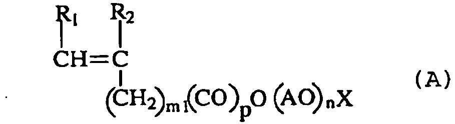 wherein R₁ represents a hydrogen atom, a methyl group or -(CH₂)mCOOM, M represents a hydrogen atom, an alkali metal, an alkaline earth metal, ammonium, an alkylammonium or a substituted alkylammonium, an amine salt or a substituted amine salt, m being a number from 0 to 2, R₂ represents a hydrogen atom or a methyl group, m1 is a number from 0 to 2, p is 0 or 1, AO is a C₂₋₄ oxyalkylene group, n is a number from 2 to 300 and X represents a hydrogen atom or a C₁₋₂₂ alkyl group;
with at least one monomer (b) selected from compounds represented by formulae (B) to (C): 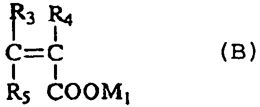 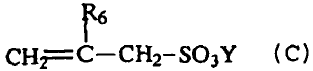 wherein R₃ to R₅ are the same as or different from one another and each represent a hydrogen atom, a methyl group or -(CH₂)ₘ₂COOM₂, R₆ represents a hydrogen atom or a methyl group, M₁, M₂ and Y are the same as or different from one another and each represent a hydrogen atom, an alkali metal, an alkaline earth metal, ammonium, an alkylammonium or a substituted alkylammonium, an amine salt or a substituted amine salt and m2 is a number from 0 to 2.

3. The method of Claim 2, wherein the copolymer is a copolymer wherein m1 is 0 and p is 1.

4. The method of claim 1, wherein the amount of the pozzolanic substance is 30 to 70 % by weight in the cement.

5. The method of any one of Claims 1 to 3, wherein the oxycarboxylic acid or the salt thereof has 2 to 20 carbon atoms, and has 1 to 8 carboxylic groups.

6. The method of any of the claims 1 to 3, wherein the amount of the oxycarboxylic acid or the salt thereof is 0.1 to less than 0.15 parts by weight to 100 parts by weight of the cement.

7. The method of any of the claims 1 and 4 to 6, wherein the high-range water-reducing agent is selected from naphtalene sulfonic acid-based agents, melamine, sulfonic acid-based agents and polycarboxylic acid-based agents.

8. Use of a high-range water-reducing agent and an oxycarboxylic acid or a salt thereof for improving fluidity retention of a cement composition comprising cement including 20 to 80 percent by weight of a pozzolanic substance and 0.1 to less than 0.2 parts by weight, to 100 parts by weight of the cement, of said oxycarboxylic acid, wherein the pozzolanic substance is natural pozzolan.

9. A hydraulic composition comprising a high-range water-reducing agent and cement, further including 0.1 to less than 0.2 parts by weight to 100 parts by weight of the cement, of an oxycarboxylic acid or a salt thereof and 20 to 80 percent by weight of a pozzolanic substance, wherein the pozzolanic substance is natural pozzolan.

10. The hydraulic composition of claim 9, wherein the oxycarboxylic acid or a salt thereof has 2 to 20 carbon atoms and 1 to 8 carboxylic groups.

## Patentansprüche

1. Verfahren zur Verbesserung der Fluiditätsretention einer hydraulischen Zusammensetzung, enthaltend Zement, umfassend 20 bis 80 Gew.% einer Pozzolansubstanz, enthaltend die Zugabe eines Hochleistungs-Wasserreduktionsmittels und 0,1 bis weniger als 0,2 Gew.-Teile, bezogen auf 100 Gew.-Teile des Zementes, einer Oxycarbonsäure oder eines Salzes davon zu der Zusammensetzung, worin die Pozzolansubstanz natürlicher Pozzolan ist.

2. Verfahren gemäß Anspruch 1, worin das Hochleistungs-Wasserreduktionsmittel ein Copolymer ist, erhalten durch Polymerisation von zumindest einem Monomer (a), dargestellt durch die Formel (A): 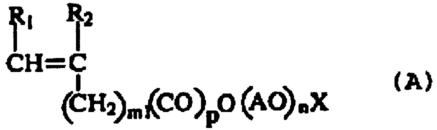 worin R₁ ein Wasserstoffatom, eine Methylgruppe oder -(CH₂)mCOOM ist, M ein Wasserstoffatom, Alkalimetall, Erdalkalimetall, Ammonium, Alkylammonium oder substituiertes Alkylammonium, Aminsalz oder ein substituiertes Aminsalz ist, m eine Zahl von 0 bis 2, R₂ ein Wasserstoffatom oder eine Methylgruppe, m1 eine Zahl von 0 bis 2, p 0 oder 1, AO eine C₂₋₄-Oxyalkylengruppe, n eine Zahl von 2 bis 300 und X ein Wasserstoffatom oder eine C₁₋₂₂-Alkylgruppe sind; mit zumindest einem Monomer (b), ausgewählt aus Verbindungen mit den Formeln (B) bis (C) : 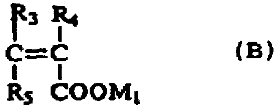 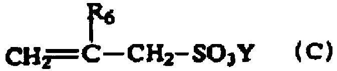 worin R₃ bis R₅ jeweils gleich oder verschieden sind und jeweils ein Wasserstoffatom, eine Methylgruppe oder -(CH₂)ₘ₂COOM₂ sind, R₆ ein Wasserstoffatom oder eine Methylgruppe ist, M₁, M₂ und Y gleich oder verschieden voneinander sind und jeweils ein Wasserstoffatom, Alkalimetall, Erdalkalimetall, Ammonium, Alkylammonium oder substituiertes Alkylammonium, Aminsalz oder substituiertes Aminsalz sind und m2 eine Zahl von 0 bis 2 ist.

3. Verfahren gemäß Anspruch 2, worin das Copolymer ein Copolymer ist, worin m1 0 und p 1 ist.

4. Verfahren gemäß Anspruch 1, worin die Menge der Pozzolansubstanz 30 bis 70 Gew.% im Zement ist.

5. Verfahren gemäß einem der Ansprüche 1 bis 3, worin die Oxycarbonsäure oder das Salz davon 2 bis 20 Kohlenstoffatome und 1 bis 8 Carboxylgruppen hat.

6. Verfahren gemäß einem der Ansprüche 1 bis 3, worin die Menge der Oxycarbonsäure oder des Salzes davon 0,1 bis weniger als 0,15 Gew.-Teile zu 100 Gew.-Teilen des Zementes ist.

7. Verfahren gemäß einem der Ansprüche 1 und 4 bis 6, worin das Hochleistungs-Wasserreduktionsmittel ausgewählt ist aus Mitteln auf Basis von Naphthalinsulfonsäure, Melamin, Mitteln auf Sulfonsäurebasis und Mitteln auf Polycarbonsäurebasis.

8. Verwendung eines Hochleistungs-Wasserreduktionsmittels und einer Oxycarbonsäure oder eines Salzes davon zur Verbesserung der Fluiditätsretention einer Zementzusammensetzung, enthaltend Zement, umfassend 20 bis 80 Gew.% einer Pozzolansubstanz und 0,1 bis weniger als 0,2 Gew.-Teile, bezogen auf 100 Gew.-Teile des Zementes, der Oxycarbonsäure, worin die Pozzolansubstanz natürlicher Pozzolan ist.

9. Hydraulische Zusammensetzung, enthaltend ein Hochleistungs-Wasserreduktionsmittel und Zement, weiterhin enthaltend 0,1 bis weniger als 0,2 Gew.-Teile zu 100 Gew.-Teilen des Zementes einer Oxycarbonsäure oder eines Salzes davon und 20 bis 80 Gew.-Teile einer Pozzolansubstanz, worin die Pozzolansubstanz natürlicher Pozzolan ist.

10. Hydraulische Zusammensetzung gemäß Anspruch 9, worin die Oxycarbonsäure oder ein Salz davon 2 bis 20 Kohlenstoffatome und 1 bis 8 Carboxylgruppen hat.

## Revendications

1. Procédé d'amélioration de la rétention de fluidité d'une composition hydraulique comprenant du ciment incluant de 20 à 80 pour cent en poids d'une substance pouzzolanique, comprenant l'ajout d'un agent réducteur d'eau de portée élevée et de 0,1 à moins de 0,2 partie en poids, pour 100 parties en poids du ciment, d'un acide oxycarboxylique ou d'un sel de celui-ci à la composition, dans lequel la substance pouzzolanique est une pouzzolane naturelle.

2. Procédé selon la revendication 1, dans lequel l'agent réducteur d'eau de portée élevée est un copolymère obtenu en polymérisant au moins un monomère (a) représenté par la formule (A) : 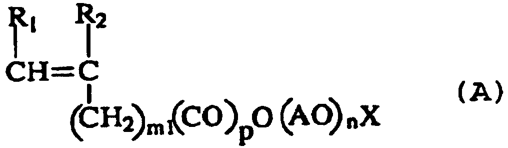 dans laquelle R₁ représente un atome d'hydrogène, un groupe méthyle ou-(CH₂)mCOOM, M représente un atome d'hydrogène, un métal alcalin, un métal alcalino-terreux, de l'ammonium, un alkylammonium ou un alkylammonium substitué, un sel d'amine ou un sel d'amine substitué, m étant un nombre de 0 à 2, R₂ représente un atome d'hydrogène ou un groupe méthyle, m1 est un nombre de 0 à 2, p est 0 ou 1, AO est un groupe oxyalkylène en C₂₋₄, n est un nombre de 2 à 300 et X représente un atome d'hydrogène ou un groupe alkyle en C₁₋₂₂;
avec au moins un monomère (b) sélectionné parmi les composés représentés par les formules (B) à (C) : 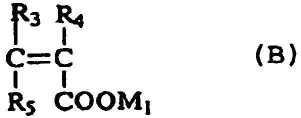 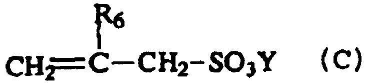 dans lesquelles R₃ à R₅ sont identiques ou différents les uns des autres et chacun représente un atome d'hydrogène, un groupe méthyle ou -(CH₂)m₂COOM₂, R₆ représente un atome d'hydrogène ou un groupe méthyle, M₁, M₂ et Y sont identiques ou différents les uns des autres et chacun représente un atome d'hydrogène, un métal alcalin, un métal alcalino-terreux, de l'ammonium, un alkylammonium ou un alkylammonium substitué, un sel d'amine ou un sel d'amine substitué et m₂ est un nombre de 0 à 2.

3. Procédé selon la revendication 2, dans lequel le copolymère est un copolymère dans lequel m1 est 0 et p est 1.

4. Procédé selon la revendication 1, dans lequel la quantité de substance pouzzolanique est de 30 à 70 % en poids dans le ciment.

5. Procédé selon l'une quelconque des revendications 1 à 3, dans lequel l'acide oxycarboxylique ou le sel de celui-ci a de 2 à 20 atomes de carbone, et a de 1 à 8 groupes carboxyliques.

6. Procédé selon l'une quelconque des revendications 1 à 3, dans lequel la quantité de l'acide oxycarboxylique ou du sel de celui-ci est de 0,1 à moins de 0,15 partie en poids pour 100 parties en poids du ciment.

7. Procédé selon l'une quelconque des revendications 1 et 4 à 6, dans lequel l'agent réducteur d'eau de portée élevée est sélectionné parmi des agents à base d'acide naphtalène sulfonique, la mélamine, des agents à base d'acide sulfonique et des agents à base d'acide polycarboxylique.

8. Utilisation d'un agent réducteur d'eau de portée élevée et d'un acide oxycarboxylique ou d'un sel de celui-ci pour améliorer la rétention de fluidité d'une composition de ciment comprenant du ciment incluant de 20 à 80 pour cent en poids d'une substance pouzzolanique et de 0,1 à moins de 0,2 partie en poids, pour 100 parties en poids du ciment, dudit acide oxycarboxylique, dans laquelle la substance pouzzolanique est une pouzzolane naturelle.

9. Composition hydraulique comprenant un agent réducteur d'eau de portée élevée et du ciment, incluant en outre de 0,1 à moins de 0,2 partie en poids pour 100 parties en poids du ciment, d'un acide oxycarboxylique ou d'un sel de celui-ci et de 20 à 80 pour cent en poids d'une substance pouzzolanique, dans laquelle la substance pouzzolanique est une pouzzolane naturelle.

10. Composition hydraulique selon la revendication 9, dans laquelle l'acide oxycarboxylique ou un sel de celui-ci a de 2 à 20 atomes de carbones et de 1 à 8 groupes carboxyliques.
